# EUROPÄISCHE PATENTANMELDUNG

(11) **EP 1 455 318 A1**
(43) Veröffentlichungstag der Anmeldung: **08.09.2004**
(21) Anmeldenummer: 04005409.0
(22) Anmeldetag: 08.03.2004
(51) Int. Cl.: G07F 19/00

(54) **Verfahren zur elektronischen, automatischen Durchführung einer gesicherten Überweisung**

(30) Priorität: 06.03.2003 DE 10310100
(71) Anmelder: Freitag, Daniel, 48165 Münster (DE)
(72) Erfinder: Freitag, Daniel, 48165 Münster (DE)
(74) Vertreter: Habbel, Ludwig (Lutz), Dipl.-Ing.

(57) **Zusammenfassung**

Bei einem Datenübertragungsverfahren zur automatisierten Durchführung einer Überweisung vom Konto eines als Kunde bezeichneten Auftraggebers zum Konto eines als Verkäufer bezeichneten Empfängers,
wobei zur Durchführung des Verfahrens folgende technische Einrichtungen vorgesehen sind:
- ein von dem Kunden bedienbares Bearbeitungsterminal,
- ein bei einem Kreditinstitut vorgesehener, als Bankserver bezeichneter Computer,
- ein von dem Verkäufer betriebener, als Shop bezeichneter Computer,
und wobei zur Duchführung des Verfahrens folgende an sich bekannten Verfahrensschritte vorgesehen sind:
- eine Datenverbindung wird vom Bearbeitungsterminal des Kunden zum Bankserver aufgebaut
   und der Kunde identifiziert sich bei dem Kreditinstitut elektronisch mittels einer standardisierten, multibankfähigen Informationstechnologie und der Künde weist seine Zugangsberechtigung zu einem bestimmten Konto nach,
   und der Kunde übermittelt elektronisch einen Überweisungsauftrag zu Lasten dieses Kunden-Kontos,
   wobei dieser Überweisungsauftrag Identifikationsdaten zu einem spezifischen Geschäftsvorgang enthält,
- dieser Überweisungsauftrag wird in Echtzeit als so genannte Direktbuchung automatisch bearbeitet, derart, dass der Kontostand des Kunden automatisch sofort um den Zahlungsbetrag reduziert wird,
schägt die Erfindung folgende Verfahrensschritte vor:
- nachdem der Überweisungsauftrag vom Bearbeitungsterminal des Kunden zum Bankserver übermittelt worden ist, wird automatisch eine Information generiert, welche ebenfalls Identifikationsdaten zu diesem Geschäftsvorgang enthält,
- diese Information wird an den Shop des Verkäufers übermittelt,
- der Shop des Verkäufers wertet diese Information automatisch aus und
- überprüft automatisch über eine zwischen dem verkäuferseitigen Shop und dem Bankserver aufgebaute Datenfernverbindung den Zahlungseingang auf dem Verkäufer-Konto,
   derart, dass die Identifikationsdaten mit den Daten derjenigen Kontobewegungen verglichen werden, welche auf dem überprüften Konto stattgefunden haben,
- wenn die überprüften Identifikationsdaten sowie der shopseitig vorgegebene Zahlungsbetrag mit den Daten eines Datensatzes eines Zahlungseingangs auf dem überprüften Konto übereinstimmen, erzeugt der Shop des Verkäufers automatisch Bestätigungssignal, welches den durch den Überweisungsauftrag ausgelösten Zahlungsvorgang bestätigt, wobei dieses Bestätigungssignal ebenfalls Identifikationsdaten zu dem zugerhörigen Geschäftsvorgang enthält.

## Beschreibung

Die Erfindung betrifft ein Verfahren zur elektronischen, automatischen Durchführung einer gesicherten Überweisung.

Aus der DE 100 49 164 A1 ist ein Verfahren zur gesicherten Durchführung einer Transaktion im elektronischen Zahlungsverkehr bekannt. Als "gesichert" ist dabei eine Transaktion anzusehen, bei welcher der Zahlungsempfänger, nachfolgend beispielhaft als "Verkäufer" bezeichnet, sicher ist, dass ihm das Geld gutgeschrieben wird, welches der Auftraggeber der Überweisung, nachfolgend beispielhaft als "Kunde" bezeichnet bei seinem Kreditinstitut zur Überweisung an den Verkäufer freigegeben hat.

Bei dieser bekannten Verfahrensweise ist nachteilig, dass sie die Installation einer Software erfordert, die nur bei einem Kreditinstitut anwendbar ist. Dies bedeutet einen erhöhten Installationsaufwand, da bei der Durchsetzung eines derartigen Zahlungssystems sämtliche Filialen sämtlicher Kreditinstitute mit einer derartigen Software ausgerüstet werden müssten. Zudem bietet die vorgeschlagene Verfahrensweise eine erhöhte Sicherheit beim Abschicken des Überweisungsauftrags, sie ermöglicht für den Verkäufer, also für den Zahlungsempfänger, jedoch keine zuverlässige Kontrolle darüber, ob ihm das Geld auch tatsächlich gutgeschrieben wird. Insofern wird keine im vorgenannten Sinn "gesicherte" Überweisung ermöglicht, sondern eine derartig gesicherte Überweisung wird lediglich für einen Teilaspekt der gesamten Transaktion ermöglicht. Je nach Rechtsordnung, innerhalb derer die Transaktion durchgeführt wird, besteht bei dem Kunden die Möglichkeit, seinen Überweisungsauftrag zu widerrufen, bis das Geld dem Konto des Verkäufers gutgeschrieben worden ist. Eine zuverlässige Information darüber, dass der Kunde den Überweisungsauftrag tatsächlich abgegeben hat und zwar wirksam abgegeben hat, das heißt mit ausreichender Deckung seines Kontos, so dass die Überweisung seitens des Kreditinstitutes auch tatsächlich freigegeben worden ist, stellt daher keine vollständig gesicherte Transaktion eines Zahlungsbetrages da.

Das bekannte Verfahren ermöglicht insbesondere nicht einem Verkäufer und einem Kunden eine gesicherte Zahlung ohne die Installation spezieller Software bei einem Kreditinstitut.

Aus der DE 100 61 560 A1 ist eine Verfahrensweise zur automatischen Abwicklung von Zahlungsvorgängen im Electronic-Commerce bekannt, die ebenfalls nur anwendbar ist, wenn bei dem in dieses Verfahren eingebundenen Kreditinstitut eine entsprechende Software installiert ist. Die Sicherheit der Überweisung soll dadurch ermöglicht werden, dass der Kunde auf sein gesetzlich verankertes Widerrufsrecht verzichtet. Abgesehen von der rein juristischen Problemstellung, ob ein derartiger Verzicht rechtswirksam ist, besteht bei dieser bekannten Verfahrensweise - wie oben erwähnt - das technische Problem, dass in einer Vielzahl von Filialen der Kreditinstitute die entsprechende Software installiert werden muss, um das Verfahren durchführen zu können, und dass es einem Kunden und einem Verkäufer nicht möglich ist, innerhalb eines "offenen Systems", also ohne Kreditinstitut-spezifische Software eine gesicherte Überweisung zu vereinbaren.

Weiterhin sind Transaktionsverfahren zur Überweisung von Geldbeträgen aus der Praxis beispielsweise im Bereich des so genannten Home-Banking bekannt. Die Informationsübermittlung erfolgt dabei zwischen einem Rechnersystem des Benutzers und einem Rechnersystem des Kreditinstituts. Mittels individueller Passwörter und / oder Identifikationsnummern und / oder Transaktionsnummern und / oder Chipkarten kann der Benutzer sich einerseits identifizieren, andererseits seine Zugangsberechtigung zu einem bestimmten Konto bei einem Kreditinstitut nachweisen, Überweisungen in Auftrag geben oder Kontostände abrufen. Dabei ist es bekannt, so genannte "multibankfähige" Technologien zu verwenden, also eine von mehreren Kreditinstituten verwendete Software-Plattform, so dass dieselbe Anwendersoftware mit mehreren Kreditinstituten benutzbar ist und ein Kunde z. B. mit derselben Software Konten bei mehreren unterschiedlichen Banken verwalten kann.

Während beim Home-Banking für die Verwendung von Chipkarten entsprechende Lesegeräte erforderlich sind, kann die Eingabe von persönlichen Identifikationsnummern (PIN) oder Transaktionsnummem (TAN) stets erfolgen, wenn der Benutzer Zugriff auf derartige Nummern hat. Diese können
a) in Form einer ausgedruckten Liste beim Kunden vorliegen, oder sie können
b) ihm individuell vor jeder Überweisung von dem Kreditinstitut elektronisch übermittelt werden, beispielsweise als SMS auf ein Mobiltelefon geschickt werden, oder sie können
c) dynamisch über eine beim Benutzer befindliche Elektronik generiert und angezeigt werden.

Nachdem der Benutzer an seinem Bearbeitungsterminal - üblicherweise seinem Heim- oder Arbeitsplatzcomputer - den Überweisungsauftrag bestätigt hat, z. B. durch einen Tastendruck, erfolgt die Überweisung elektronisch und automatisch durch das Rechnersystem des Kreditinstituts. Es kann dabei vorgesehen sein, eine automatische Überprüfung des Kontostandes durchzuführen, so dass bei entsprechenden Überprüfungsergebnissen die Überweisung automatisch abgelehnt werden kann und nicht durchgeführt wird.

Für viele Anwendungsformen von Bezahlungen ist die Daten-übermittlung von einer nachteiligen Langsamkeit: Wenn beispielsweise bei einem Kauf per Internet der Kunde die Bestellung aufgibt, besteht für den Verkäufer die Möglichkeit, entweder in Vorleistung zu treten oder die Bestellung erst abzuwickeln, nachdem der Zahlungseingang auf dem Konto des Verkäufers gutgeschrieben ist.

Beide Vorgehensweisen sind mit Nachteilen verbunden: Im erstgenannten Fall besteht die Möglichkeit, dass der Kunde nicht zahlt, so dass jedenfalls ein erhöhter Bearbeitungsaufwand auf Seiten des Verkäufers aufzuwenden ist und eventuell die Zahlung gar nicht eingetrieben werden kann.

Im zweitgenannten Fall ist ein erhöhter Bearbeitungsaufwand beim Verkäufer erforderlich, da die Bestellung erst zeitverzögert abgearbeitet werden kann. Dies ist für den Kunden nachteilig, da es zu einer verzögerten Lieferung der von ihm gewünschten Ware führt, und natürlich für den Verkäufer, bei dem der Geschäftsvorgang - beispielsweise ein Kauf - mehrfach in Bearbeitung genommen werden muss, nicht sofort in einem Zug abgearbeitet werden kann, und Lagerraum für die reservierten Waren beansprucht, wo diese zwischen der Bestellung durch den Käufer und der Auslieferung zwischengelagert werden.

Rein beispielhaft wurde für eine Geschäftsbeziehung ein Kauf erwähnt. Nachfolgend werden die Bezeichnungen "Verkäufer" stellvertretend für verschiedene Anbieter von Produkten oder Dienstleistungen und "Käufer" oder "Kunde" stellvertretend für denjenigen, der gegen Bezahlung diese Produkte oder Dienstleistungen in Anspruch nimmt, verwendet. Über die reine Anwendung bei Internet-Käufen hinausgehend besteht sowohl für Verkäufer als auch für Kunden der Wunsch, in vielen Anwendungsbereichen eine sichere und schnelle Bezahlung sowie eine dementsprechend schnelle Information über die erfolgte Bezahlung zu verwenden.

So kann zum Beispiel eine gesicherte Bezahlung durch Versendung eines Produktes "gegen Nachnahme" ermöglicht werden, wobei der Kunde bei Auslieferung des Produktes eine Bezahlung an den Ausliefernden leistet, jedoch ist ein derartiger Zahlungsvorgang auf den Kauf von Gegenständen beschränkt. In elektronischen Systemen ablaufende Dienstleistungen jedoch sind damit nicht erfassbar, wie beispielsweise eine kostenpflichtige Wegstreckenberechnung, deren Ergebnis auf dem Monitor oder Drucker des Kunden angezeigt wird.

Der Erfindung liegt die Aufgabe zugrunde, ein Verfahren zu schaffen, das eine so genannte gesicherte Geldübertragung automatisch, möglichst schnell und mit dem Erfordernis eines möglichst geringen technischen Installationsaufwandes ermöglicht.

Diese Aufgabe wird durch ein Verfahren mit den Merkmalen des Anspruches 1 gelöst.

Verglichen mit einer Erfindung auf mechanischem Gebiet schlägt die vorliegende Erfindung vor, an sich bekannte Komponenten zu verwenden und so miteinander zu verbinden, dass ein überraschender, neuer Erfolg damit bewirkt wird: die Erfindung schlägt vor, auf überraschend einfache Weise an sich bekannte Komponenten der Informationstechnologie, die beispielsweise beim Home-Banking verwendet werden, zu nutzen. Zwei an sich bekannte Schritte, die normalerweise unabhängig voneinander durchgeführt werden, werden dabei zu einem Verfahren verknüpft und von den Geschäftspartnern, nämlich Kunde und Verkäufer, in bestimmter zeitlicher Abfolge durchgeführt:
1. Das Aussenden eines Überweisungsauftrags an das Kreditinstitut - hier: durch den Kunden -, und
2. Das Einsehen in den Kontostand - hier: durch den Verkäufer in das Konto des Verkäufers.

Als besonderer Aspekt des vorgeschlagenen Verfahrens kommt hinzu, dass der Verkäufer möglichst zeitnah nach dem Aussenden des Überweisungsauftrags seinen Kontostand überprüft. Als weiterer besonderer Aspekt des vorgeschlagenen Verfahrens kommt hinzu, dass der Verkäufer und der Kunde ihre Konten bei demselben Kreditinstitut eingerichtet haben. Auf diese Weise kann die Kontostandsabfrage für das Verkäuferkonto zu einem möglichst frühen Zeitpunkt erfolgen, abhängig von der technischen Einrichtung des Kreditinstituts. Hierauf wird später noch detaillierter eingegangen.

Im schnellsten Fall einer in Echtzeit erfolgenden Überweisung und anschließend in Echtzeit erfolgenden Bestätigungsmeldung über den erfolgten Zahlungseingang kann das dem Verkäufer angezeigte Bestätigungssignal unspezifisch und flüchtig sein, wie eine akustisches Signal oder ein optisches Signal in Form eines Farbumschlags von rot auf grün auf dem Monitor des verkäuferseitigen Computers, oder in Form der Anzeige eines "o.k." - Schriftzuges oder dergleichen. Der Verkäufer kann nun die gewünschte Ware versandfertig machen.

Vorteilhaft jedoch wird ein Bestätigungssignal erzeugt, welches spezifische Daten zu dem Geschäftsvorgang enthält - wie etwa die Adresse des Kunden und den bestellten Artikel-und welches dauerhaft ist - wie etwa ein Ausdruck auf Papier oder auf einem selbsklebenden Etikett. Auf diese Weise wird die Auftragsbearbeitung erheblich erleichtert und kann insbesondere auch problemlos zeitversetzt erfolgen, beispielsweise wenn das Buchungssystem des Kreditinstituts die Ausführung der Buchung nicht in Echtzeit, sondern in bestimmten zeitlichen Intervallen vorsieht. Ein automatisch erzeugtes Bestätigungssignal kann für den Menschen lesbaren Klartext enthalten und / oder zugunsten einer weitgehend automatisierten weiteren Auftragsbearbeitung maschinenlesbare Daten enthalten.

Die dazu benötigten technischen Einrichtungen sind an sich bekannt und werden aus diesem Grund nicht im Einzelnen beschrieben.
■ Bei dem Kreditinstitut muss der elektronische Zugriff des Kunden auf sein Konto möglich sein, also beispielsweise über das Internet wie bei bekannten Home-Banking-Systemen und mit mit entsprechenden Berechtigungsschlüsseln wie HBCI / PIN /TAN.
■ Bei dem Verkäufer ein über das Internet zugängliches Shop-System, welches für Kunden zugänglich ist und eine Schnittstelle zur Zahlungsabwicklung aufweist. Es ist für derartige Shop-Systeme bekannt, dass bei einer Kaufabwicklung über das Internet der Verkäufer dem Käufer ein virtuelles Formular übermittelt, welches bereist bestimmte Angaben zu dem Kauf enthält, und dass der Käufer dann dieses auf seinem Bildschirm angezeigte virtuelle Formular weiter ausfüllt, beispielsweise um dem Verkäufer eine Lastschriftermächtigung zu erteilen, und hierzu die Daten seiner Bankverbindung mittels der Tastatur in das virtuelle Formular eingibt. Anschließend wird dieses ausgefüllte Formular vom Kunden an den Verkäufer übermittelt, also die entsprechenden Informationen vom Rechner des Kunden über das Internet zum Rechner des Verkäufers übertragen.
■ Beim Kunden muss ein Rechnersystem mit Intemetzugang vorhanden sein, und der Kunde muss bei dem Kreditinstitut ein online-fähiges bzw. für Home-Banking eingerichtetes Konto führen.
Hinzu kommt, dass zur Durchführung des vorgeschlagenen Verfahrens der Verkäufer und der Kunde ihre Konten in demselben Intranet des Kreditinstituts führen, beispielsweise bei derselben Filiale des Kreditinstituts oder bei unterschiedlichen Filialen desselben Kreditinstituts, wenn diese Filialen dieselbe Bankleitzahl verwenden oder an dasselbe Rechenzentrum angeschlossen sind. So kann die Zeit von häufig mehreren Tagen abgekürzt werden, die ansonsten für die Informationsübermittlung von einem zu einem anderen Kreditinstitut benötigt wird, wenn diese beiden Kreditinstitute nicht mittels ein- und desselben Intranets zur Datenübertragung miteinander verbunden sind.

Für Fälle, in denen der Verkäufer und der Kunde ihre Konten nicht in demselben Intranet eines Kreditinstituts haben, kann das vorgeschlagene Verfahren durch einen zusätzlichen Verfahrensschritt durchgeführt werden. Dieser zusätzliche Verfahrensschritt bedeutet eine minimale zeitliche Verzögerung der Informationsübermittlung im Vergleich zu der erheblich längeren Verzögerung, wenn die Informationsübermittlung von einem ersten Kreditinstitut zu einem zweiten Kreditinstitut erfolgt, welches einem anderen Intranet angeschlossen ist als das erste.

Der zusätzliche Verfahrensschritt besteht darin, dass der Kunde die Überweisung auf ein "Zwischenkonto" vornimmt, welches nicht unmittelbar das Konto des Verkäufers ist. Das Zwischenkonto ist bei einem Kreditinstitut eingerichtet, welches mit dem Konto des Kunden über dasselbe Intranet verbunden ist, so dass innerhalb dieses Intranets die schnellstmögliche "Realtime"-, "Express"- oder "Standard"-Informationsübertragung zum Inhaber des Zwischenkontos erfolgen kann, sobald der Kunde seinen Überweisungsauftrag an sein kontoführendes Kreditinstitut übermittelt hat.

Erfindungsgemäß ergibt sich ein zweifacher technischer Erfolg:
■ Erstens wird als unmittelbarer, messbarer technischer Erfolg die Übermittlung einer bestimmten Information an den Verkäufer zu einem möglichst frühen Zeitpunkt und daher in einer optimal schnellen Zeit ermöglicht, nämlich die Information darüber, dass die Überweisung vollendet wurde und somit ohne Widerrufsmöglichkeit "gesichert" ist. Dabei ist für diese Geschwindigkeitsmessung nicht die Geschwindigkeit der Informationsübermittlung innerhalb eines Informationsleiters - wie in einem Kupfer- oder Glasfaserkabel - relevant, sondern die Geschwindigkeit, innerhalb welcher Zeitspanne diese Information dem Informationsempfänger - hier: dem Verkäufer - zugänglich gemacht wird.
■ Zweitens wird als zusätzlicher technischer Erfolg die Einrichtung eines gesicherten Zahlungssystems auf besonders einfache Weise ermöglicht, nämlich ohne spezielle Software, welche ausschließlich bei Kreditinstituten lauffähig ist. So wird ein erheblicher Installationsaufwand vermieden.

Im Ergebnis wird als technischer Beitrag unter Nutzung bekannter Informationstechnologie ein Verfahren geschaffen, weiches als verkäuferseitig und kundenseitig einfach zu installierendes, nicht Bank-spezifisches und dementsprechend "offenes" System den schnellen informationsfluss zwischen dem Verkäufer und dem Kunden ermöglicht, so dass Installationskosten auf Seite der Kreditinstitute und Lagerfläche sowie Lagerhaltungskosten auf Seite der Verkäufer minimiert werden können. Dabei wird vorschlagsgemäß die Überweisung in an sich bekannter Weise nach wie vor über ein Kreditinstitut ausgeführt, und dementsprechend erfolgt der Informationsfluss nach wie vor stets über das Kreditinstitut.
Bei einem Zug-um-Zug abgewickelten Kauf in der realen Welt präsentiert der Verkäufer die Ware, der Kunde übergibt das Geld und anschließend händigt der Verkäufer die Ware aus. Dies kann innerhalb von wenigen Augenblicken bzw. Minuten erfolgen. Bei bekannten PC-gestützten Verfahren zur Bezahlung nimmt die Übergabe des Geldes erheblich längere Zeit in Anspruch, teils von mehreren Tagen, bis der Betrag auf dem Konto des Verkäufers gutgeschrieben ist. Verglichen mit anderen PC-gestützten Verfahren zur Bezahlung ergibt sich daher bei dem vorschlagsgemäßen Verfahren ein Effekt, als ob die Übertragungsgeschwindigkeit der Daten drastisch erhöht würde, und dies mit überraschend einfachen Mitteln. Der Informationsfluss innerhalb der einzelnen über das Internet miteinender verbundenen Computersysteme sowie zwischen ihnen wirkt sich für die an diesem Verfahren beteiligten Verkäufer und Kunden hinsichtlich ihrer realen Situation so aus, als ob sie sich in einem Geschäft gegenüberständen und der Kunde dem Verkäufer Bargeld übergäbe. Im Ergebnis kann daher der Verkäufer die Ware in kürzestmöglicher Zeit auch dann aushändigen, wenn es sich um ein Zug-um-Zug-Geschäft handelt, der Verkäufer also erst den Zahlungseingang bei seinem eigenen Konto abwartet.

Der Begriff der dabei benutzten "Informationstechnologie" umfasst erstens die erforderliche Software, die auf dem Bearbeitungsterminal läuft, welches der Kunde bedient, sowie auf dem Rechensystem des Kreditinstituts. Zweitens umfasst dieser Begriff auch die Hardware, die z. B. in Form des Bearbeitungsterminals oder eines ggf. zusätzlich erforderlichen Kartenlesegerätes vorhanden sein muss, ggf. auch - je nach Übermittlung von eventuell verwendeten TANs - zusätzliche Hardware in Form eines gedruckten TAN-Briefes, des zur Anzeige der TANs benötigten Mobiltelefons oder des elektronischen Gerätes, welches die TAN fallweise bei jeder Überweisung generiert.

Durch die Verwendung dieser an sich bekannten Informationstechnologie ist sichergestellt, dass ein Multibank-fähiger Standard verwendet werden kann, mit dem all jene Kreditinstitute arbeiten können, die ihren Kunden die Möglichkeit des Home-Banking anbieten. Dies sind in der Praxis mittlerweile nahezu sämtliche Kreditinstitute. Zudem ist ein Installationsaufwand zur Einrichtung neuer, spezifischer Software nicht erforderlich oder vergleichsweise gering.

Auf dem Rechnersystem des Verkäufers wird automatisch eine Überprüfung ausgelöst, ob die Zahlung erfolgt ist, und zwar mittels grundsätzlich derselben Transaktionstechnologie: Mit der Home-Banking-typischen Möglichkeit, Kontobewegungen auf dem eigenen Konto einzusehen ("Kontoauszüge abholen"), greift das System des Verkäufers automatisch auf das Konto des Verkäufers zu. Wenn der Zahlungseingang festgestellt wird, so handelt es sich um eine so genannte "gesicherte" oder "durchgeführte" Überweisung, da die Information vorliegt, dass die Überweisung bis einschließlich zum Zahlungseingang beim Verkäufer komplett abgewickelt worden ist und somit vom Kunden nicht mehr widerrufbar ist.

Die möglichst zeitnahe Einsicht in den Kontostand des Verkäufers nach dem Absenden des Überweisungsauftrags durch den Kunden kann in drei sehr unterschiedlichen "Zeitfenstern" erfolgen, und zwar abhängig davon, bei welchem Kreditinstitut der Kunde sein Konto hat und welche technische Einrichtung dieses Kreditinstitut zur Ausführung der Überweisungsaufträge benutzt:
1. Bei so genannten Direktbuchungssystemen erfolgt eine Übertragung der Informationen in Echtzeit. Wenn der Kunde seine Überweisung freigibt, also den Überweisungsauftrag an sein Kreditinstitut abschickt, wird das Kundenkonto sofort belastet und die belastete Summe in Echtzeit dem Empfängerkonto gutgeschrieben. Ein derartiges Verfahren wird nachfolgend als "Realtime"-Verfahren bezeichnet. Die Laufzeit der Überweisung ist minimal und kann als "sofort" bezeichnet werden, sie entspricht der Echtzeit-Übertragungsdauer der Überweisungsinformationen.
2. Wenn das Kreditinstitut des Kunden periodisch in Intervallen von beispielsweise 1 bis 6 Stunden die zuvor eingetroffenen Überweisungsaufträge weiterleitet, wird ein derartiges Verfahren nachfolgend als "Express"-Verfahren bezeichnet. Die Laufzeit der Überweisung ist klein. Der Verkäufer kann in engmaschigen Zeitintervallen die Internetverbindung zu seinem Konto aufbauen und die Zahlungseingänge auf seinem Konto überprüfen, um zum frühestmöglichen Termin die Information über eine gesicherte Überweisung zu erhalten. Die vorgenannten Zeitintervalle sind zu diesem Zweck vorzugsweise nicht größer als die von dem Kreditinstitut für die Weiterleitung der Überweisungsaufträge gewählten Zeitintervalle.
3. Wenn das Kreditinstitut des Kunden periodisch einmal pro Tag die zuvor eingetroffenen Überweisungsaufträge weiterleitet, wird ein derartiges Verfahren nachfolgend als "Standard"-Verfahren bezeichnet. Die Laufzeit der Überweisung beträgt maximal 24 Stunden. Der Verkäufer kann täglich die Internetverbindung zu seinem Konto aufbauen und die Zahlungseingänge auf seinem Konto überprüfen, um auch in diesem Fall zum frühestmöglichen Termin die Information über eine gesicherte Überweisung zu erhalten.

Es ist aus der Praxis bereits bekannt, dass im Rahmen so genannter Direktbuchungssysteme eine Überweisung von dem Kreditinstitut sofort ausgeführt wird, wenn der entsprechende Überweisungsauftrag bei dem Kreditinstitut eingeht. Das heißt, dass das Konto des Kunden sofort um den entsprechenden Zahlungsbetrag reduziert wird, da die Überweisung in Echtzeit, also "realtime" durchgeführt wird.

Ein Bestätigungssignal wird dann automatisch erzeugt, um anzuzeigen, dass die Zahlung durch das Rechnersystem des Kreditinstituts mit positivem Ergebnis überprüft worden ist. Dabei kann das Bestätigungssignal für Menschen wahrnehmbar ausgestaltet sein, um die weitere Bearbeitung des jeweiligen Geschäftsvorgangs zu ermöglichen bzw. auslösen: beispielsweise in Form eines automatisch generierten Ausdrucks auf Papier, Etiketten oder dergleichen, oder in Form eines Ton- oder Lichtsignals, oder als Anzeige auf einem Monitor.

Es kann jedoch alternativ oder zusätzlich dazu vorgesehen sein, das Bestätigungssignal als Impuls innerhalb einer automatischen Datenverarbeitungsanlage zu verwenden. So kann beispielsweise vorgesehen sein, dass das Bearbeitungsterminal, welches der Kunde bedient, nicht beim Kunden installiert ist, sondern beim Verkäufer oder an sonstigen Standorten, z. B. in Form von einem Geld- oder Warenausgabeautomat. Das Bestätigungssignal kann in derartigen Fällen dazu dienen, die Geldoder Warenausgabe automatisch auszulösen.

Formulierungen im Rahmen des vorliegenden Vorschlags, dass "der Kunde" oder "der Verkäufer" handelt, bedeutet dabei, dass in den meisten derartigen Fällen die rechnergestützten Systeme automatisch die beschriebenen Handlungen durchführen. Dies gilt insbesondere für die verkäuferseitige Durchführung des Verfahrens, die vollautomatisch erfolgen kann, während käuferseitig Eingaben durch den Menschen vorgesehen sind, z. B. die Auswahl eines gewünschten Produkts, oder die Eingabe der Kontodaten, oder die Eingabe von PINs, TANs oder ähnlichen Codes.

Um beim Einsehen des Verkäufer-Kontos zuverlässig und automatisch einen Abgleich mit den Daten der Zahlungseingänge zu ermöglichen, kann der Verkäufer dem Kunden zuvor ein virtuelles Überweisungsformular zur Verfügung stellen. Darin sind in an sich bekannter Weise zusätzlich zur Bankverbindung des Verkäufers bestimmte Informationen - beispielsweise Zahlungssumme, Artikelnummer oder Verwendungszweck - bereits automatisch vom Shop-System des Verkäufers eingefügt, die später eine eindeutige Zuordnung der Zahlung ermöglichen. Durch die Vorgabe dieser Informationen sind die Möglichkeiten von Fehleingaben des Kunden verringert.

Eventuell können vom Shop-System des Verkäufers auch bereits Daten des Kunden in dieses virtuelle Überweisungsformular eingefügt werden: Wenn der Kunde beispielsweise Stammkunde . ist, so kann vorgesehen sein, dass entweder auf dem Rechnersystem des Kunden ein so genanntes "Cookie" installiert ist, oder dass auf dem Rechnersystem des Verkäufers die Stammdaten des Kunden gespeichert sind, die beispielsweise Informationen über die Kontoverbindung des Kunden enthalten. Ansonsten muss der Kunde diese Kontoverbindung selbst einfügen. In jedem Fall müss der Kunde anschließend in an sich bekannter Weise den Überweisungsauftrag an sein Kreditinstitut unter Vorlage entsprechender Zugangsberechtigungs- und weiterer Identifikationsnachweise abschicken.

Das vorgeschlagene Verfahren ist stets dann möglich, wenn Kunde und Verkäufer ihre Konten in demselben Direktbuchungssystem eines Kreditinstituts eingerichtet haben. Diese Übereinstimmung liegt bei vergleichsweise wenigen, zufälligen Kombinationen von Kunde und Verkäufer vor, kann dann aber mit dem beschriebenen Vorteilen genutzt werden. Dabei kann vorgesehen sein, dass bei der Übermittlung eines virtuellen Überweisungsformulars vom Verkäufer an den Kunden ein interaktiver Datenaustausch zwischen Verkäufer und Kunde erfolgt: Bei Feststellung der Übereinstimmung, also wenn Kunde und Verkäufer ihre Konten in demselben Direktbuchungssystem eines Kreditinstituts eingerichtet haben, wird automatisch eine an den Verkäufer gerichtete Information ausgelöst, wenn der Kunde seinen Überweisungsauftrag an das Kreditinstitut absendet. Anschließend kann die Software auf dem Shop-Computer des Verkäufers innerhalb kürzestmöglicher Zeit den Zahlungseingang auf dem Konto des Verkäufers automatisch überprüfen, indem zum Bankserver eine Datenverbindung aufgebaut und die Kontobewegungen des Verkäufer-Kontos abgefragt werden.

Zur Sicherstellung dieser Übereinstimmung mit möglichst sätntlichen Kunden kann vorgesehen sein, dass der Verkäufer in jedem Direktbuchungssystem ein Konto führt, also in jedem oben erwähnten Intranet von Kreditinstituten, d. h. beispielsweise bei jeder Bank oder sogar bei jeder Bankfiliale. Insbesondere wenn es sich um ein größeres Unternehmen mit einer entsprechenden Vielzahl von Buchungs- und Bestellvorgängen handelt, kann dies wirtschaftlich sinnvoll sein. In diesem Fall kann insbesondere vorgesehen sein, dass bei der Übermittlung eines virtuellen Überweisungsformulars vom Verkäufer an den Kunden ein interaktiver Datenaustausch zwischen Verkäufer und Kunde erfolgt, und dass die Kontoverbindung des Verkäufers erst dann automatisch in das Formular eingesetzt wird, wenn der Kunde seinerseits seine Bankverbindung angegeben hat. In diesem Fall greift die verkäuferseitige Software auf eine Datenbank mit gespeicherten Kontoverbindungen des Verkäufers zu und wählt aus der Vielzahl von Kontoverbindungen diejenige aus, die im selben Direktbuchungssystem bzw. unter derselben Bankleitzahl geführt ist wie das Konto des Kunden.

Alternativ zu dem Aufwand, dass jeder Verkäufer bei sämtlichen Direktbuchungssystemen jeweils ein eigenes Konto führt, kann vorgesehen sein, dass nicht der Verkäufer selbst diese Konten führt, sondern eine zwischengeschaltete, als "Clearingstelle" oder "Provider" bezeichnete Stelle, die einen eigenen Computer mit einer Software betreibt, welche Kontostandsabfragen bei den Kreditinstituten ermöglicht sowie die Übermittlung von Nachrichten zu den Verkäufern. Diese Stelle kann beispielsweise für eine Vielzahl von Verkäufern tätig sein und ihrerseits in sämtlichen Direktbuchungssystemen jeweils wenigstens ein eigenes Konto führen. Wenn nachfolgend verallgemeinernd von dem Verkäufer gesprochen wird, kann daher in vielen Fällen auch die Clearingstelle an dessen Stelle treten.

Dem Kunden gegenüber tritt diese Clearingstelle dann als Empfängerkonto auf. Aufgrund der in Echtzeit ablaufenden Überweisungs- und Kontrollvorgänge kann die Clearingstelle bei Anwendung des "Realtime"-Verfahrens nahezu verzögerungsfrei den Eingang der Zahlung auf einem ihrer Konten feststellen, so dass dann eine elektronische Benachrichtigung an den tatsächlichen bzw. eigentlichen Verkäufer übermittelt werden kann, so dass diesem der erfolgte Zahlungseingang mitgeteilt wird und dieser dann den Geschäftsvorgang nahezu verzögerungsfrei weiter abwickeln kann. Dabei kommen Käufer und Verkäufer in den Genuss der Vorteile einer gesicherten Überweisung, wobei insbesondere kleinere Unternehmen als Verkäufer ohne den Aufwand einer Vielzahl zu führender Konten auskommen können, und auch für die Kreditinstitute reduziert sich die Anzahl von zu verwaltenden Konten dadurch, dass mehrere Verkäufer ihre Konten bei Clearingstellen bündeln.

Für die vorbeschriebenen Datenübermittlungen kann entweder das bislang erwähnte Internet genutzt werden oder auch ein Intranet. Falls ein frei zugänglicher "Marktplatz" im Intranet eines Kreditinstitutes zur Verfügung freisteht, kann über diesen Marktplatz und über das Intranet die Zahlung abgewickelt und die Kontrolle der Zahlung durchgeführt werden.

Der Zugriff auf einen Marktplatz selbst kann beispielsweise über das Internet erfolgen. In diesem Fall muss der Verkäufer lediglich auf diesen Marktplatz zugreifen können, ohne jedoch bei sämtlichen im Intranet angeschlossenen Filialen bzw. Kreditinstituten Konten zu führen. Die Informationen über die erfolgte Überweisung kann vielmehr innerhalb des Intranet übermittelt und auf dem Marktplatz verfügbar gemacht werden, und zwar in Echtzeit, so dass der Verkäufer nahezu verzögerungsfrei auf den Marktplatz zugreifen kann und dort die Bestätigung über die in Auftrag gegebene bzw. über die bereits durchgeführte Überweisung einholen kann.

Abweichend von dem bislang beschriebenen Ausführungsbeispiel, demzufolge ein Kauf Zug um Zug über das Intemet abgewickelt wird, kann das vorgeschlagene Verfahren auch auf andere Art genutzt werden. Beispielsweise kann vorgesehen sein, dass der Verkäufer einen Geldautomaten mit einer Software ausstattet, die den Geldautomaten an Stelle des Kunden-PCs zu einem vom Kunden bedienbaren Terminal macht. Bei Eingabe des Auszahlungswunsches durch den Kunden kann vorgesehen sein, dass der Kunde - wie bei dem zuvor beschriebenen Kauf per Internet - eine Datenverbindung von dem Geldautomaten zu seinem Kreditinstitut aufbaut und dort eine Überweisung über den entsprechenden Betrag in Auftrag gibt. Wenn die Durchführung der Überweisung kontrolliert wurde, also der Zahlungseingang auf dem Konto des Verkäufers automatisch in der oben beschriebenen Weise bestätigt wurde, wird der Geldautomat automatisch freigeschaltet, so dass er die entsprechende Geldsumme in an sich bekannter Weise ausgibt.

Weiterhin sind im Rahmen des vorgeschlagenen "Realtime"-Verfahrens durch die nahezu verzögerungsfreie Bestätigung des erfolgten Zahlungseinganges auch über das Internet Geschäftsabwicklungen "in letzter Minute" bzw. in einem sehr schnell ablaufenden interaktiven Wechselspiel möglich, beispielsweise die Bezahlung von Lotto-Einsätzen kurz vor der tatsächlichen Ziehung, oder das Setzen von Geldbeträgen in einem virtuellen Roulettespiel od. dgl.

In der Bundesrepublik Deutschland sind die vorgenannten Banking-Technologien wie HBCI, FinTS oder auch T-Online bekannt. Unabhängig von der genauen Wirkungsweise dieser Technologie betrifft der vorliegende Vorschlag allgemein die Nutzung von Transaktionstechnologien - auch ausländischer oder zukünftiger Standards -, die sich vordergründig durch eine Standardisierung auszeichnen, also multibankfähig sind, und die eine möglichst schnelle, insbesondere in Echtzeit ablaufende, überprüfbare Ausführung der Überweisung ermöglichen.

Zum Absenden des Überweisungsauftrages kann der Kunde einerseits einen stationären PC benutzen, andererseits sind mobile Überweisungen beispielsweise mittels eines Laptops möglich, oder es können entsprechende Terminals an den einzelnen Zahlungsstellen vorgesehen sein, beispielsweise in Geschäften, an Tankstellen, an den vorgenannten Geldautomaten od. dgl.

Insbesondere wenn die eingangs erwähnte Identifizierung und Zahlungsautorisierung mittels TAN erfolgt, ist kein Chipkartenleser beim Eingabegerät erforderlich, so dass eine besonders einfache und preisgünstige Ausgestaltung der einzelnen Zahlungsstellen möglich ist.

Als dritte Alternative neben Chipkarte und TAN kann die Identifikation eines Kunden per Signaturkarte erfolgen, wobei hier ein entsprechender Chipkartenleser beim Kunden vorgesehen sein muss und ein Trustcenter die entsprechenden Kundendaten verwalten muss.

Rein beispielhaft kann eine Überweisung wie folgt ablaufen:

Wenn der Kunde an einem Verfahrensschritt "bezahlen über bestätigte Überweisung" im Internet bzw. in einer Shoplösung angelangt ist, wird von dem Rechner des Verkäufers eine Software auf das Bearbeitungsterminal des Kunden geladen. Diese Software - z. B. als Plug-In oder als JAVA-Applet - ist der eigentliche Client des Zahlungssystems, also beispielsweise der eigentliche HBCI- bzw. FinTS-Client. Ein Applet oder Plug-In wird beispielsweise in einem geöffneten Browser-Fenster angezeigt.

Der Kunde identifiziert sich nun beispielsweise durch Einschieben seiner Chipkarte in ein Lesegerät, um sich zu identifizieren, also seine Kontodaten anzuzeigen, und gibt seine PIN ein, um die Überweisung zu autorisieren. Alternativ kann er manuell seine Bankleitzahl, seine Kontonummer und seine PIN sowie eine TAN - gleich auf welchem der vorgenannten Wege er diese erhalten hat - über die Tastatur seiner im Internet aktivierten Technologie eingeben. Dabei können Eingabegeräte mit einer Tastatur vorgesehen sein oder es kann eine virtuelle Tastatur benutzt werden, beispielsweise bei einem berührungssensitiven Bildschirm.

Über den vorgenannten Banking-Client, also beispielsweise den erwähnten HBCI- bzw. FinTS-Client werden nun die Auftraggeberdaten des Kunden um die Empfängerdaten des Auftragnehmers, also des Verkäufers, automatisch durch die Shop-Software ergänzt, beispielsweise wird Empfängername, Bankleitzahl, Kontonummer, Betrag, Verwendungszweck (darin enthalten beispielsweise Rechnungsnummer, Kundennummer u. dgl.) ausgefüllt. Die soweit vollständig ausgefüllte Überweisungs-Erfassungsmaske ("Überweisungsformular") wird dem Kunden zur Überprüfung angezeigt. Eine Positivbestätigung kann beispielsweise per Tastendruck erfolgen, so dass die Überweisung nun in Echtzeit ausgeführt werden kann oder - bei einer negativen Entscheidung nach Kontenabgleich oder fehlender Verfügungsberechtigung - abgelehnt werden kann.

Abweichend von dem zuvor beschriebenen Ablauf kann vorgesehen sein, dass bei dem angezeigten Überweisungsvordruck zunächst die vom Verkäufer vorzugebenden Daten aufgeführt werden und anschließend die Kundendaten eingefügt werden, beispielsweise manuell oder von einer Chipkarte ausgelesen od. dgl.

Ausgehend von diesem abgeschickten Überweisungsauftrag ergeben sich die beiden erwähnten, unterschiedlichen weiteren Verfahrensweisen:

Wenn der Empfänger kein Konto im Direktbuchungssystem des Kreditinstitutes des Kunden hat, so ist z. B. bei einer Positivbestätigung durch die Applet-Software zu prüfen, ob das Kreditinstitut den Betrag vom Konto des Kunden abgebucht hat. In diesem Fall ist die Position in der Kontoübersicht des Kundenkontos festzustellen und dem Shop, d. h. dem "Verkäufer" ist der positive Zahlungsvorgang sofort bekannt. Eine entsprechende Einverständniserklärung des Kunden, dass er diese Rückbestätigung akzeptiert, da es sich um seine persönlichen schutzwürdigen Daten handelt, kann der Kunde elektronisch bei Auslösung des Überweisungsauftrages abgegeben haben. Dieses Auslösen des Überweisungsauftrages, beispielsweise durch Tastendruck des Kunden, stellt gleichzeitig ein Überweisungssignal für den Client dar, so dass dieses Überweisungssignal anschließend automatisch die entsprechende Überprüfung des Zahlungsvorganges auslöst.

Wenn der Empfänger ein Konto im Direktbuchungssystem des Kunden-Kreditinstitutes hat, kann ein Zugriff automatisch auf das Empfängerkonto erfolgen. Ist dort der Echtzeit-Zahlungseingang in der Kontoübersicht durch die Shop-Software festzustellen, so ist der Zahlungsvorgang positiv verlaufen. In diesem Fall ist keine Zustimmung des Kunden erforderlich.

In beiden Fällen, also je nach Bestätigung der in Auftrag gegebenen oder sogar der beim Verkäufer eingegangenen Zahlung kann die weitere Geschäftsabwicklung sofort erfolgen, beispielsweise durch elektronische Übermittlung von Informationen oder durch tatsächliche, logistische Transporte von Waren bzw. durch die Ausführung von Dienstleistungen. Wartezeiten werden ausgeschlossen und die umständliche, verlust- und fehlerbehaftete mehrfache Bearbeitung desselben Geschäftsvorganges durch Menschen kann vermieden werden.

Das vorgeschlagene Verfahren kann über das Internet abgewickelt werden. Es verbilligt die Zahlungsdurchführung, ganz gleich, ob an der Ladenkasse, am Home-PC, am Arbeitsplatz-PC, am Kiosk, am Geld- bzw. Warenautomaten oder mobil am PDA / MDA (Persönlicher bzw. Mobiler Digitaler Assistent), Notebook oder Mobiltelefon. Überall kann nach dem gleichen Verfahren sicher und direkt bezahlt werden. Hohe Gebühren, z. B. für die Kreditkärten- oder ec-cash-Zahlungen sowie für die Investition in die Systeme von Bezahlterminals können im Handel entfallen. Es fallen lediglich die Standard-Überweisungsgebühren im Internet an. Das Verfahren eignet sich nicht nur für die Shop-Präsenz im Internet, sondern auch für stationäre Kassen bzw. Bezahlterminals mit Internetanschluss.

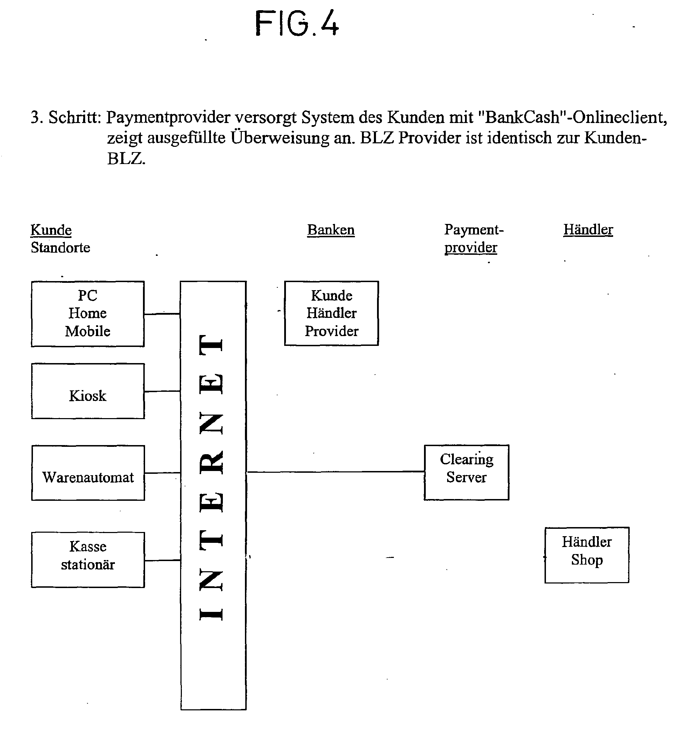

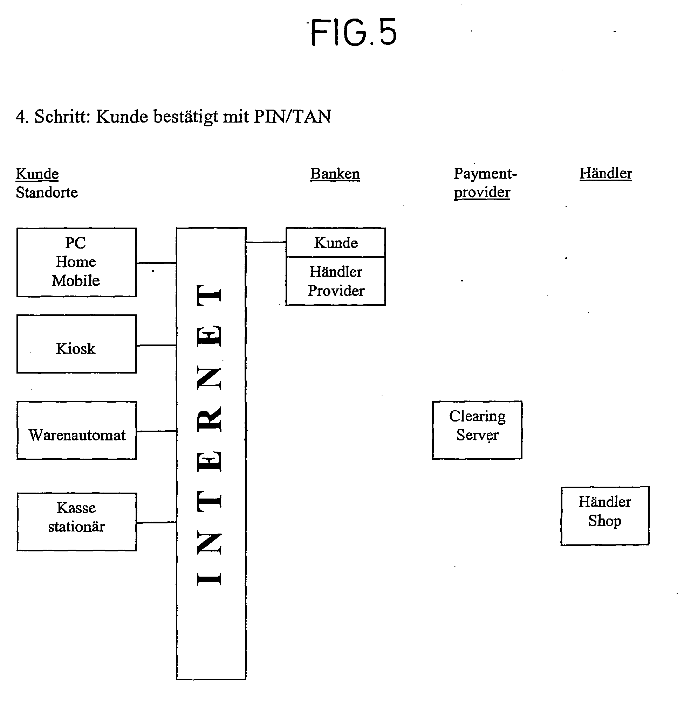

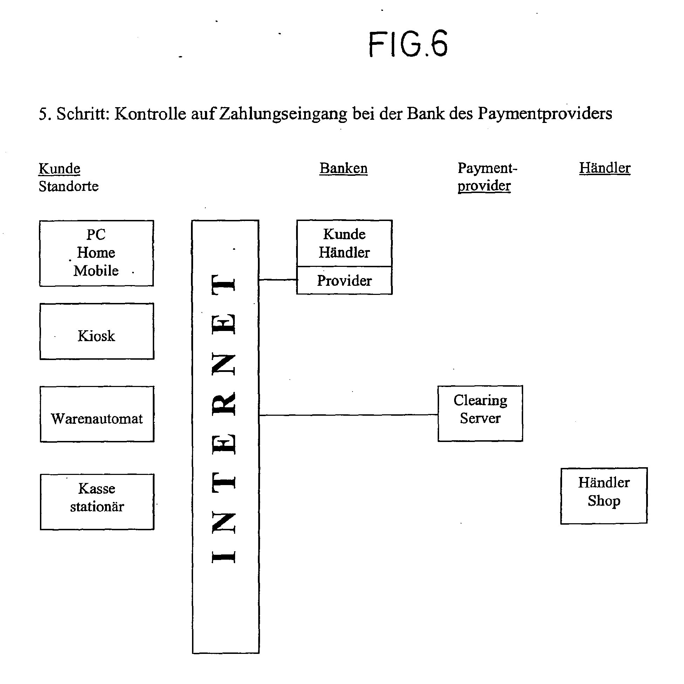

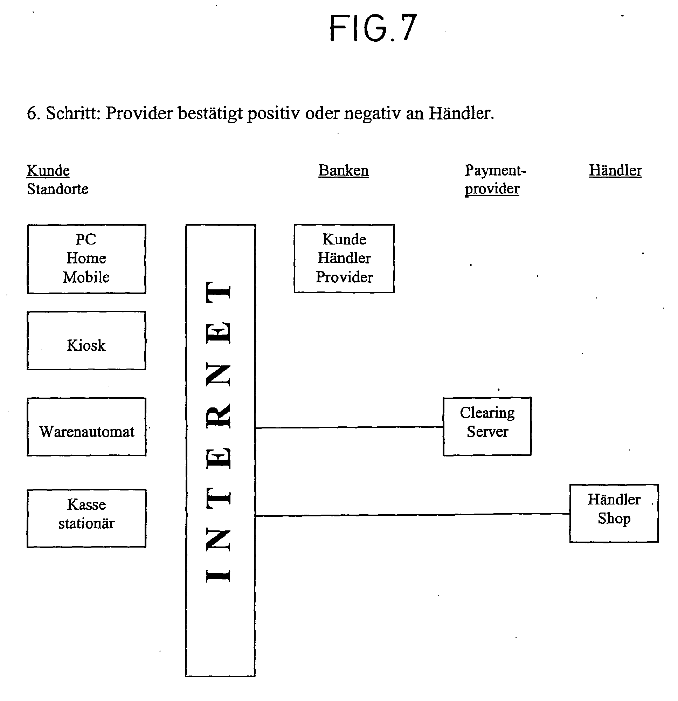

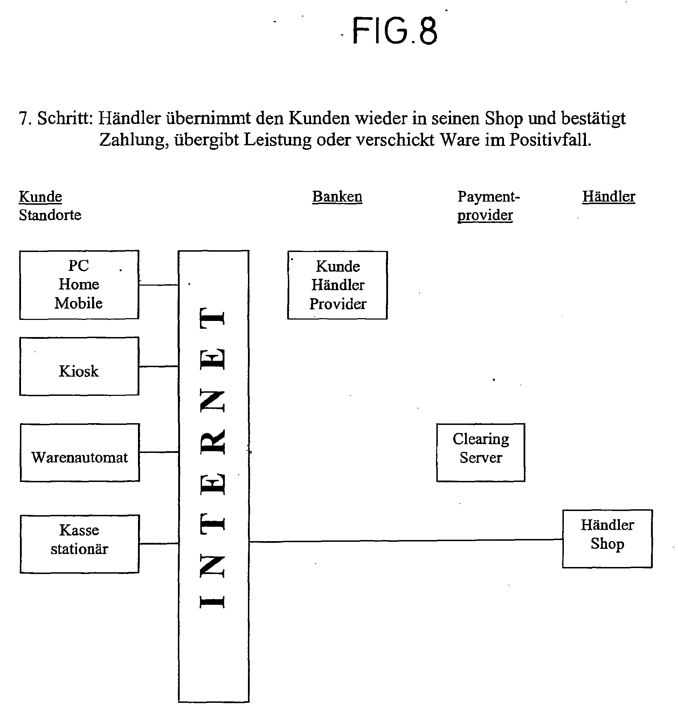

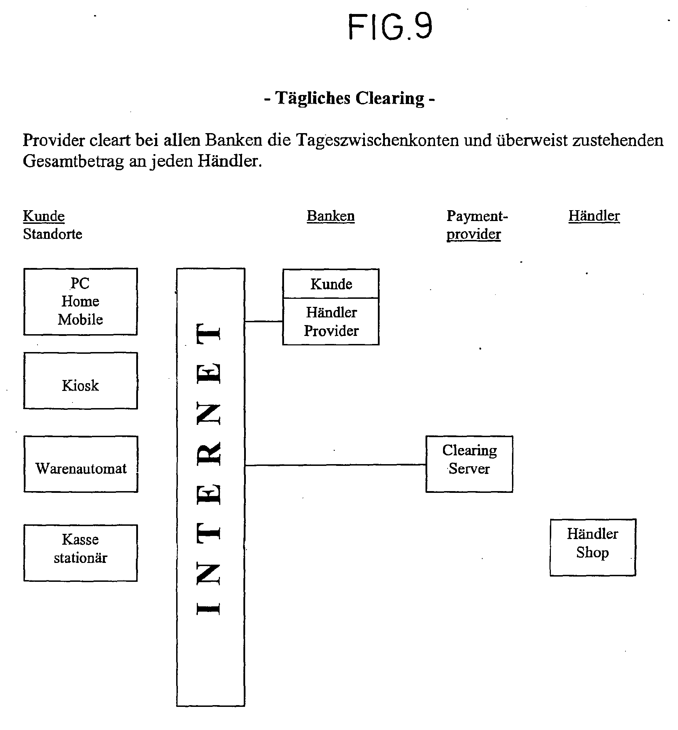

Die vorschlagsgemäß vorgesehenen Verfahrensschritte werden anhand der schematischen Zeichnungen nachfolgend näher erläutert. Dabei zeigen die
- Fig. 1 - 9: einzelne Verfahrenschritte bei der Abwicklung eines Kaufs mit gesicherter Bezahlung über das Internet und
- Fig. 10: zeigt anhand eines Organisations-Schaubilds die Informationsflüsse zwischen den einzelnen über das Internet miteinander verbundenen Rechnersystemen.

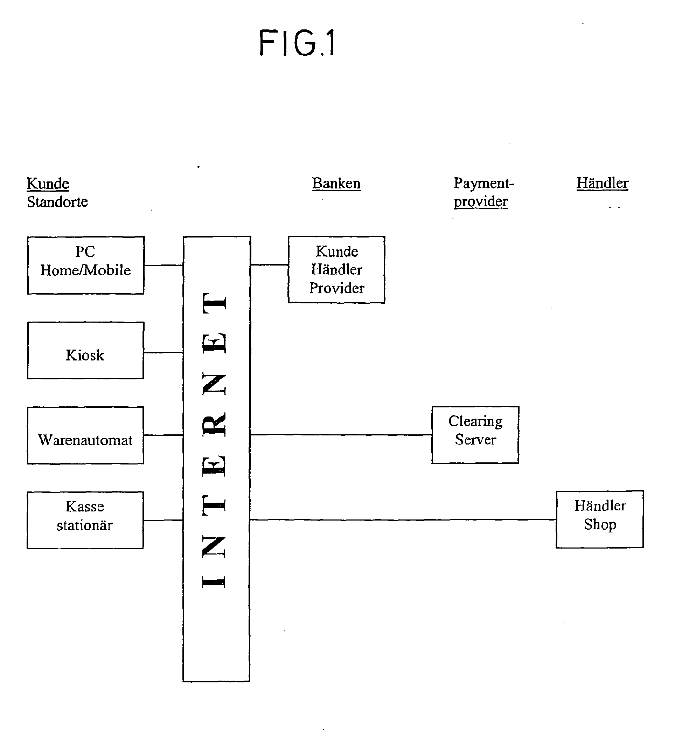

In Fig. 1 ist schematisch dargestellt, welche einzelnen Rechnersysteme vorgesehen sind:

Der Kunde kann einerseits an seinem Home-PC, Arbeitsplatz-PC oder an einem mobilen PC (Notebook) arbeiten. Alternativ kann vorgesehen sein, dass an einer Verkaufsstelle, wie einem Kiosk, einem Warenautomat oder an einer Kasse in einem Geschäft, ein Terminal vorgesehen ist, welches Homebanking-fähig ist, d. h. einerseits über eine Datenleitung mit einem Kreditinstitut verbunden ist und andererseits über Eingabemittel wie eine Tastatur, einen Touch-Screen oder ein Mikrofon für die Eingabe von Sprachbefehlen und weiterhin muss dieses Terminal für die Benutzerführung des Kunden Anzeigemittel aufweisen, beispielsweise in Form eines Monitors oder für Sprachausgabe einen Lautsprecher. Rein beispielhaft wird davon ausgegangen, dass das Internet für die Informationsübertragung genutzt wird und in der schematischen Darstellung der Fig. 1 ist demzufolge vorgesehen, dass die verschiedenen Terminalmöglichkeiten, die der Kunde zur Verfügung hat, an das Internet angeschlossen sind. Demzufolge sind Linien mit vergleichsweise dünner Strichstärke von den einzelnen Kundenterminals zum Internet eingezeichnet.

Seitens der Bank ist ein an sich bekanntes Rechnersystem vorgesehen, welches Homebanking-fähig ist und dieses Rechnersystem ist demzufolge an dieselbe Datenübertragungsleitung angeschlossen, beim dargestellten Beispiel an das Internet. Weiterhin ist in Fig. 1 in dem schematisch dargestellten Rechnersystem des Kreditinstitutes angedeutet, dass eine Informationsübertragung nicht nur zwischen diesem Rechnersystem und dem Kunden, sondern auch mit dem Verkäufer ("Händler") sowie einem "Provider" vorgesehen ist, wobei dieser Provider die vorgenannte Clearing-Stelle ist. Dabei wird davon ausgegangen, dass der Verkäufer ein kleines bzw. mittelgroßes Unternehmen ist, welches nicht in sämtlichen Kreditinstituten bzw. in sämtlichen Intranets der Kreditinstitute Konten führt, so dass aus diesem Grunde der Provider hinsichtlich der Zahlungsabwicklung zwischen dem Verkäufer und den Kunden zwischengeschaltet ist.

Fig. 1 zeigt, dass dieser Provider ein Rechnersystem installiert hat, welches als "Clearing-Server" bezeichnet ist und ebenfalls an das Internet angeschlossen ist, so dass eine entsprechende Datenübertragung zwischen diesem Clearing-Server und beispielsweise dem Kreditinstitut sowie dem Verkäufer erfolgen kann.

Der Verkäufer hat ein Rechnersystem, auf dem das vorerwähnte Shop-System installiert ist. Demzufolge ist auch dieses Rechnersystem in an sich bekannter Weise an das Internet angeschlossen.

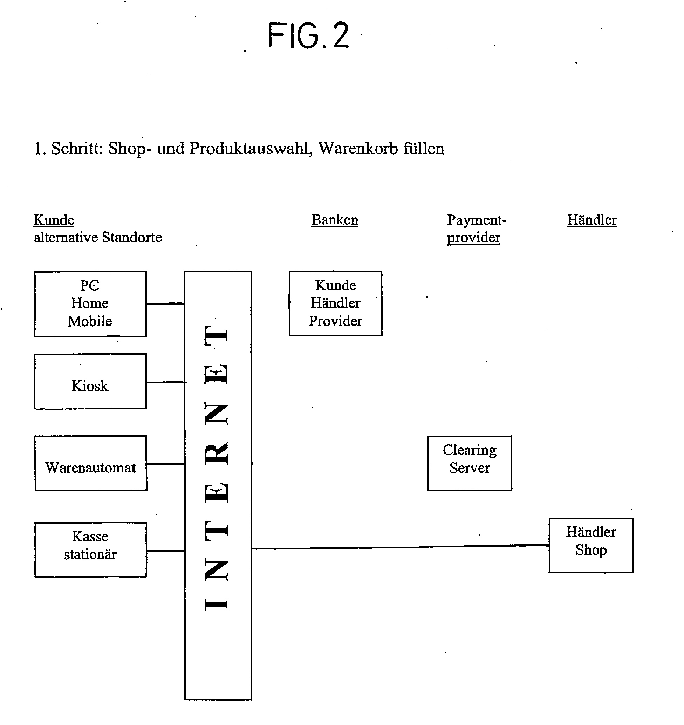

Während in Fig. 1 vergleichsweise dünne Linien von den einzelnen Rechnersystemen bzw. Terminals zum Internet verlaufen, um die Möglichkeit von Informationsübertragungen darzustellen, zeigt Fig. 2 nur die tatsächlich genutzten Datenübertragungswege , wenn der Kunde eine Verbindung zum Shop-System des Verkäufers aufbaut, also einerseits den Shop bzw. den Verkäufer auswählt und andererseits dann in diesem Shop-System bestimmte Produkte auswählt.

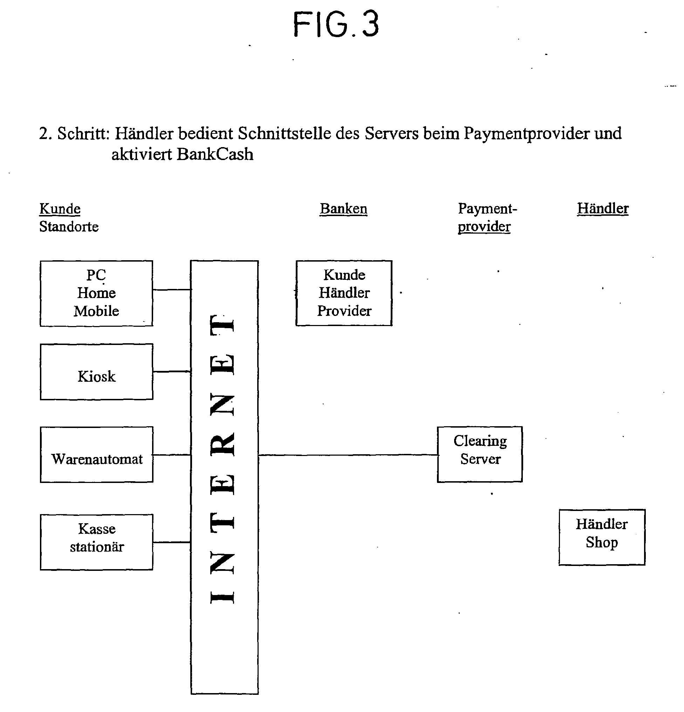

Fig. 3 zeigt, dass nach der Produktauswahl eine Datenübertragung zwischen dem Kundenterminal einerseits und dem Clearing-Server, also dem Provider erfolgt. Zuvor sind dem Kunden entsprechende Informationen übermittelt worden, dass als Zahlungsempfänger nicht unmittelbar der Verkäufer in Erscheinung tritt, sondern der Provider. Anschließend wird über eine entsprechende Schnittstelle das Rechnersystem des Providers zugeschaltet, so dass nun eine Datenübertragung in Form eines interaktiven Datenaustausches zwischen dem Kunden und dem Provider, also der Clearingstelle erfolgen kann. Im Rahmen dieses Datenaustausches kann beispielsweise die Bankleitzahl des Kunden an den Provider übermittelt werden, beispielsweise durch manuelle Eingabe des Kunden selbst oder durch eine automatisch generierte Information, beispielsweise unter Nutzung der so genannten "Cookies", die kostenpflichtige und nunmehr bezahlte Informationen oder wie die Angabe darüber, dass eine gekaufte Ware demnächst versendet wird. Der Verkäufer hat nun die Möglichkeit, die Ware sofort für den Kunden bereitzustellen im Rahmen eines Zug-um-Zug Geschäftes.

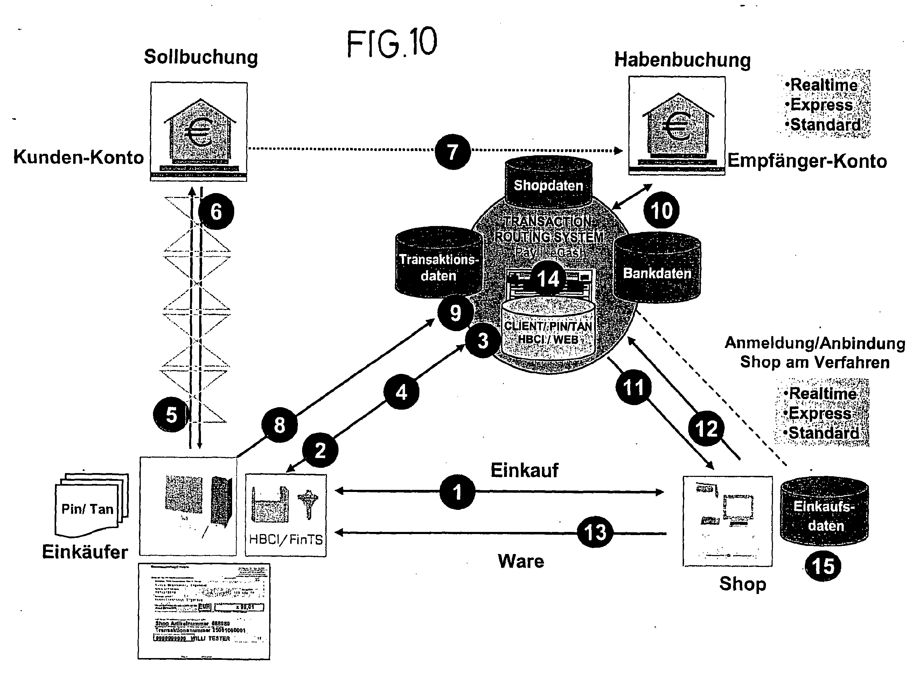

Bei 14 ist in Fig. 10 angedeutet, dass der Provider die Konten mit dem Verkäufer-abstimmt, und bei 15 ist angedeutet, dass automatisch der Zahlungseingang mit den Warenausgangswerten im Rahmen eines automatisierten Forderungsmanagements abgeglichen wird.

Gemäß diesem vorgeschlagenen beschriebenen Verfahren beginnt der Prozess für den Käufer in den Internetseiten des Verkäufers, die Einrichtung einer speziellen Software oder einer Anmeldung des Kunden bei einem speziellen Bezahlservice od. dgl. ist nicht erforderlich. Es werden vielmehr ausschließlich in der Praxis bereits genutzte Software-Komponenten sowohl beim Kunden als auch beim Kreditinstitut genutzt; die Zahlungsabwicklung selbst findet daher in an sich bekannter Weise in einer privaten Datenverbindung des Kunden mit seinem Kreditinstitut statt. Sämtliche transferierten Daten sind dabei durch eine SSL-Verschlüsslung (Secure-Socket-Layer) gesichert.

## Patentansprüche

1. Datenübertragungsverfahren zur automatisierten Durchführung einer Überweisung vom Konto eines als Kunde bezeichneten Auftraggebers zum Konto eines als Verkäufer bezeichneten Empfängers,
wobei zur Duchführung des Verfahrens folgende technische Einrichtungen vorgesehen sind:
■ ein von dem Kunden bedienbares Bearbeitungsterminal - wie ein Heim- oder Arbeitsplatzcomputer, ein Geldausgabeautomat oder ein Kassenautomat in einem Verkaufsraum,
wobei das Bearbeitungsterminal über eine Datenfernverbindung - wie das Intemet - Daten bidirektional von bzw. zu einem anderen Computer übertragen werden können,
und wobei auf dem Bearbeitungsterminal eine Software installiert ist, derart, dass über die Datenfernverbindung Überweisungsaufträge an das Kreditinstitut übermittelbar sind,
■ ein bei einem Kreditinstitut vorgesehener, als Bankserver bezeichneter Computer,
wobei der Bankserver über eine Datenfernverbindung - wie das Internet - eine Datenübertragung von und zu einem anderen Computer - wie dem Bearbeitungsterminal - ermöglicht,
und wobei auf dem Bankserver in an sich bekannter Weise eine Software zur Kontoführung installiert ist, derart, dass über die Datenfernverbindung Überweisungsaufträge an das Kreditinstitut übermittelbar sind und Kunden des Kreditinstituts die Kontobewegungen ihrer jeweiligen Konten einsehen bzw. abrufen können,
■ ein von dem Verkäufer betriebener, als Shop bezeichneter Computer,
wobei der Shop über eine Datenfernverbindung - wie das Internet - eine Datenübertragung von und zu einem anderen Computer - wie zum Bearbeitungsterminal oder zum Bankserver - ermöglicht,
und auf welchem eine an sich bekannte, als "Shop-System" bezeichnete Software installiert ist, welche erstens die Präsentation bestimmter Waren und / oder Dienstleistungen ermöglicht und zweitens die Abwicklung von Bestellvorgängen und die Übertragung von zahlungsrelevanten Daten - wie Artikelnummer oder Bestellmenge -,
und wobei zur Duchführung des Verfahrens folgende an sich bekannten Verfahrensschritte vorgesehen sind:
■ eine Datenverbindung wird vom Bearbeitungsterminal des Kunden zum Bankserver aufgebaut und der Kunde identifiziert sich bei dem Kreditinstitut elektronisch mittels einer standardisierten, multibankfähigen Informationstechnologie - wie sie als HBCI oder FinTS bekannt ist -,
und der Kunde weist seine Zugangsberechtigung zu einem bestimmten Konto nach,
und der Kunde übermittelt elektronisch einen Überweisungsauftrag zu Lasten dieses Kunden-Kontos,
wobei dieser Überweisungsauftrag Identifikationsdaten zu einem spezifischen Geschäftsvorgang enthält,
■ dieser Überweisungsauftrag wird in Echtzeit als so genannte Direktbuchung automatisch bearbeitet, derart, dass der Kontostand des Kunden automatisch sofort um den Zahlungsbetrag reduziert wird,
und wobei das Verfahren durch folgende Verfahrensschritte gekennzeichnet ist:
■ nachdem der Überweisungsauftrag vom Bearbeitungsterminal des Kunden zum Bankserver übermittelt worden ist, wird automatisch eine Information generiert, welche ebenfalls Identifikationsdaten zu diesem Geschäftsvorgang enthält,
■ diese Information wird an den Shop des Verkäufers übermittelt,
■ der Shop des Verkäufers wertet diese Information automatisch aus und
■ überprüft automatisch über eine zwischen dem Shop ■ und dem Bankserver aufgebaute Datenfernverbindung den Zahlungseingang auf dem Verkäufer-Konto,
derart, dass die Identifikationsdaten mit den Daten derjenigen Kontobewegungen verglichen werden, welche auf dem überprüften Konto stattgefunden haben,
■ im Positivfall, wenn also die überprüften Identifikationsdaten sowie der shopseitig vorgegebene Zahlungsbetrag mit den Daten eines Datensatzes eines Zahlungseingangs auf dem überprüften Konto übereinstimmen, erzeugt der Shop des Verkäufers automatisch ein Bestätigungssignal, welches den durch den Überweisungsauftrag ausgelösten Zahlungsvorgang bestätigt.

2. Verfahren nach Anspruch 1, **dadurch gekennzeichnet, dass** das Bestätigungssignal von einem Menschen wahrnehmbar ist - wie ein optisches oder akustisches Signal -, derart, dass dieses Bestätigungssignal zur Freigabe der vom Kunden gewünschten Informationen oder zur Freigabe der Aussendung der vom Kunden gewünschten Ware auswertbar ist.

3. Verfahren nach Anspruch 1 oder 2, **dadurch gekennzeichnet, dass** das Bestätigungssignal ebenfalls Identifikationsdaten zu dem zugerhörigen Geschäftsvorgang enthält - wie ein angezeigter oder ausgedruckter Text.

4. Verfahren nach einem der vorhergehenden Ansprüche,
**dadurch gekennzeichnet,**
**dass** eine als Provider bezeichnete Clearingstelle vorgesehen ist,
wobei diese Clearingstelle ein Konto in demselben Direktbuchungssystem hat, in welchem auch das Konto des Kunden eingerichtet ist,
und wobei die Clearingstelle einen als Clearing Server bezeichneten Computer aufweist,
wobei der Clearing Server über eine Datenfemverbindung - wie das Intemet - eine Datenübertragung von und zu einem anderen Computer - wie dem Bearbeitungsterminal, dem Bankserver und / oder dem Shop - ermöglicht,
und wobei auf dem Clearing Server in an sich bekannter Weise eine Software zur Kontoführung installiert ist, derart, dass über die Datenfernverbindung die Zahlungsbewegungen auf dem Konto der Clearingstelle automatisch eingesehen bzw. abgerufen werden können,
und **dass** der Kunde bei dem Datensatz, welchen er an den Bankserver als Überweisungsauftrag überträgt, das Konto der Clearingstelle als Empfängerkonto angibt,
und **dass**, nachdem der Überweisungsauftrag vom Bearbeitungsterminal des Kunden zum Bankserver übermittelt worden ist, automatisch die Information generiert wird, welche ebenfalls Identifikationsdaten zu diesem Geschäftsvorgang enthält, und diese Information zu dem Clearing Server übertragen wird,
und **dass** vom Clearing Server anschließend automatisch eine Information über den Status der Überweisung - wie "positiv erfolgt" oder "nicht ausgeführt" - zu dem Shop des Verkäufers übermittelt wird.

5. Verfahren nach einem der vorhergehenden Ansprüche, **dadurch gekennzeichnet,**
**dass** zum Bearbeitungsterminal des Kunden ein Web-Client übermittelt wird, welcher dem Kunden einen automatisch erzeugten Datensatz anzeigt, welcher Daten der vorzunehmenden Überweisung enthält,
wobei der Datensatz die Identifikationsdaten für den geplanten Geschäftsvorgang enthält - wie Kontodaten des Verkäufers, eine Kauf- oder Vorgangs-Nummer, Angaben über Preis, Artikelnummer und Bestellmenge -,
und **dass** der Käufer die in diesem Datensatz enthaltenen Daten - ggf. mit seinen Kontoangaben ergänzt - und seine Zugangsberechtigung an das Kreditinstitut übermittelt.

6. Verfahren nach Anspruch 5, **dadurch gekennzeichnet,**
**dass** der Datensatz mit den Daten der vorzunehmenden Überweisung als virtueller, automatisch erzeugter Überweisungsvordruck dargestellt wird, welcher bereits zumindest teilweise ausgefüllt ist.

7. Verfahren nach Anspruch 5 oder 6, **dadurch gekennzeichnet,**
**dass** zum Bearbeitungsterminal des Kunden ein Web-Client übermittelt wird, welcher dem Kunden den automatisch erzeugten Datensatz anzeigt.

8. Verfahren nach einem der Ansprüche 5 bis 7, **dadurch gekennzeichnet,**
**dass** die in den Datensatz einzufügenden Kundendaten - wie die Kontoverbindung des Kunden - in einem Speicher des Shops oder des Clearing-Servers oder als Cookie auf dem Bearbeitungsterminal des Kunden gespeichert sind, und dass diese Kundendaten automatisch in den Datensatz eingefügt werden.

9. Verfahren nach einem der vorhergehenden Ansprüche,
**dadurch gekennzeichnet,**
**dass** vom Bearbeitungsterminal des Kunden zu dem Computer des vorgesehenen Zahlungsempfängers, also zum Shop des Verkäufers oder zum Clearing Server der Clearingstelle, eine Information über die Kontoverbindung des Kunden übermittelt wird,
wobei in dem Computer des vorgesehenen Zahlungsempfängers eine Datenbank mit mehreren Datensätzen gespeichert ist, die jeweils Angaben zu Kontoverbindungen des jeweiligen Zahlungsempfängers enthalten,
und **dass** automatisch aus dieser Datenbank ein Datensatz einer Kontoverbindung ausgewählt wird, die in demselben Direktbuchungssystems installiert ist wie die Bankverbindung des Kunden,
und **dass** die überweisungsrelevanten Daten dieses Datensatzes automatisch zum Bearbeitungsterminal des Kunden übermittelt werden und automatisch in den Datensatz eingefügt werden, welcher als Überweisungsauftrag vom Bearbeitungsterminal zum Bankserver übertragen wird.

10. Verfahren nach einem der vorhergehenden Ansprüche, **dadurch gekennzeichnet,**
**dass** die automatische Überprüfung des Zahlungseingangs auf dem Konto des Zahlungsempfängers, des Verkäufers oder der Clearingstelle, zeitverzögert durchgeführt wird,
wobei das Verzögerungsintervall in Abhängigkeit von den Zeitintervallen festgelegt ist, zu denen das Kreditinstitut die Buchungen vornimmt - wie als Direktbuchungen in Echtzeit, als periodische Buchungen im Abstand mehrerer Stunden, oder als tägliche Buchungen im Abstand von etwa 24 Stunden.
